# EUROPEAN PATENT APPLICATION

(11) **EP 4 657 431 A1**
(43) Date of publication of application: **03.12.2025**
(21) Application number: 24746961.2
(22) Date of filing: 05.01.2024
(51) Int. Cl.: G10L 15/22

(54) **VOICE INTERACTION GUIDANCE METHOD, PROGRAM, DEVICE, AND VEHICLE**

(30) Priority: 28.01.2023 CN 202310144736
(71) Applicant: Shenzhen Yinwang Intelligent Technologies Co., Ltd., Shenzhen, Guangdong 518110 (CN)
(72) Inventor: SU, Qi, Shenzhen, Guangdong 518129 (CN); NIE, Weiran, Shenzhen, Guangdong 518129 (CN)
(74) Representative: Gill Jennings & Every LLP
(86) International application number: PCT/CN2024/070772
(87) International publication number: WO 2024/156254

(57) **Abstract**

A speech interaction guiding method (200 or 300), a program, an apparatus, and a vehicle (100) are provided. The method (200) includes: A control apparatus (110) obtains information about a first operation, where the first operation is a non-driving operation performed by a user on a vehicle (100) in a traveling state of the vehicle (100) (S210); obtains an operation intent of the first operation through analysis based on the information about the first operation (S220); and pushes guide information corresponding to the operation intent of the first operation, where the guide information indicates the user to implement the operation intent of the first operation through speech interaction (S230). This implements intelligent identification of user intents and effective guidance, and improves convenience of human-machine interaction.

## Description

This application claims priority to Chinese Patent Application No. 202310144736.5, filed with the China National Intellectual Property Administration on January 28, 2023 and entitled "SPEECH INTERACTION GUIDING METHOD, PROGRAM, APPARATUS, AND VEHICLE", which is incorporated herein by reference in its entirety.

### TECHNICAL FIELD

This application relates to the field of intelligent vehicle technologies, and in particular, to a speech interaction guiding method, a program, an apparatus, and a vehicle.

### BACKGROUND

As vehicle intelligence develops increasingly, a user has an increasingly high requirement on driving safety and operation convenience of an intelligent vehicle. Currently, some vehicles may perform speech interaction with a user, so that the user enters an operation instruction by using a voice, to improve interaction convenience. However, because the user usually does not have a knowledge of an application scope of speech interaction, or is not accustomed to a speech interaction operation, when the vehicle can be controlled by using a voice instruction, an operation is still performed in a touch manner. This reduces convenience of human-machine interaction.

### SUMMARY

Embodiments of this application provide a speech interaction guiding method, a program, an apparatus, and a vehicle, to effectively guide a user to control the vehicle through speech interaction. This improves convenience of human-machine interaction.

According to a first aspect, an embodiment of this application provides a speech interaction guiding method. The method may be performed by a control apparatus (for example, a control apparatus 110 in a vehicle 100 in the following), and the control apparatus may be implemented as a component in a vehicle, for example, a chip, a chip system, or another functional module that can invoke and execute a program. For ease of understanding, the following describes the method by using the control apparatus as an execution body.

For example, the method includes: The control apparatus obtains information about a first operation, where the first operation is a non-driving operation performed by a user on a vehicle in a traveling state of the vehicle. For example, the first operation may be one or more touch operations, the touch operation may include but is not limited to a single-tap touch operation, a double-tap touch operation, a drag touch operation, a slide touch operation, a single-point touch operation, a multi-point touch operation, a touch input operation, and the like. A driving operation is an operation of controlling traveling of the vehicle by a driver, for example, controlling the vehicle to move forward, move backward, or turn. In addition, an operation performed by the user (including the driver) of the vehicle on the vehicle is the non-driving operation, for example, controlling an air conditioning function, controlling a fragrance function, playing music, starting navigation, and activating a seat massage function of a driver seat in the foregoing example. The control apparatus obtains an operation intent of the first operation through analysis based on the information about the first operation, for example, a control that is operated by the user and that is recorded in an operation flow and an operation sequence of the control, and pushes guide information corresponding to the operation intent of the first operation, where the guide information indicates the user to implement the operation intent of the first operation through speech interaction, and the guide information may include at least one of an audio, a character, an image, and a video.

According to the speech interaction guiding method provided in the first aspect, the operation intent of the user is recognized based on the operation intent of the user, and then speech interaction is guided based on the operation intent of the user, to implement intelligent identification of an operation intent of the user and effective guidance, and ensure convenience of human-machine interaction.

In a possible implementation, the method further includes: obtaining in-cockpit data of the vehicle, where the in-cockpit data includes data of a driver of the vehicle; and determining, based on the in-cockpit data, that the user is the driver of the vehicle. The in-cockpit data of the vehicle may include at least one of image data, radar detection data, and seat bearing data.

Considering that a user performing the first operation is not the driver, for example, a user in a front passenger seat, impact on driving safety is low in this case. Therefore, whether the user performing the first operation is the driver is determined based on the in-cockpit data. Further, when the user performing the first operation is the driver of the vehicle, speech interaction guidance is performed, to avoid guiding the operation intent of performing the first operation by the user in a case in which driving safety is affected. This meets an operation requirement of the user.

In a possible implementation, the determining, based on the in-cockpit data, that the user is the driver of the vehicle includes: when the in-cockpit data includes data of one user, determining that the user is the driver of the vehicle; and when the in-cockpit data includes data of a non-driver, recognizing the data of the driver of the vehicle to obtain a feature of the driver, and determining, based on the feature of the driver, that the user is the driver of the vehicle.

According to the speech interaction guiding method provided in this implementation, when the in-cockpit data includes the data of one user, it may be determined that the user performing the first operation is the driver. This improves processing efficiency. When the in-cockpit data includes the data of the driver, the feature of the driver in the in-cockpit data is further recognized, to determine, based on the feature of the driver, whether the user performing the first operation is the driver. This improves processing accuracy.

In a possible implementation, the feature of the driver includes a line-of-sight direction feature and/or a body action feature of the driver.

The line-of-sight direction feature of the driver may reflect a direction of a line-of-sight direction of the driver. For example, the control apparatus determines, by analyzing the line-of-sight direction feature of the driver, whether the line-of-sight direction of the driver points to a human-machine interaction apparatus that inputs the first operation, and further determines that the user performing the first operation is the driver of the vehicle. This improves accuracy of detecting a driver operation. Similarly, the body action feature of the driver may reflect whether the driver operates the human-machine interaction apparatus. For example, the control apparatus analyzes a body action of the driver, and when the head of the driver turns to the human-machine interaction apparatus that inputs the first operation, the control apparatus determines that the user performing the first operation is the driver of the vehicle. This improves accuracy of detecting the driver operation.

In a possible implementation, the pushing the guide information corresponding to the operation intent of the first operation includes: when a vehicle speed of the vehicle is less than or equal to a first preset vehicle speed, pushing the guide information corresponding to the operation intent of the first operation.

The guide information is pushed when the vehicle speed is low, to prevent the user from paying attention to the guide information in a driving process, and avoid affecting driving safety.

In a possible implementation, the method further includes: obtaining a vehicle speed and/or a gear of the vehicle; and determining, based on the vehicle speed and/or the gear, that the vehicle is in the traveling state.

The traveling state of the vehicle is accurately determined based on the vehicle speed and/or the gear of the vehicle, to accurately determine safety of performing the first operation by the user, so as to ensure necessity of pushing the guide information for speech interaction, and improve driving safety.

In a possible implementation, the determining, based on the vehicle speed and/or the gear, that the vehicle is in the traveling state includes: if the vehicle speed is greater than or equal to a second preset vehicle speed, and/or the gear is a preset gear, determining that the vehicle is in the traveling state. The preset gear is a gear at which the vehicle can travel. For example, the preset gear may include but is not limited to a reverse (reverse, R) gear, a neutral (neutral, N) gear, and a drive (drive, D) gear.

When the vehicle speed is high and/or a driving gear is a drivable gear, the guide information for speech interaction is pushed, to ensure necessity of pushing speech interaction information, and improve driving safety.

In a possible implementation, the pushing the guide information corresponding to the operation intent of the first operation includes: displaying the guide information on a display; and/or playing the guide information through a loudspeaker.

The guide information is presented and/or played in a picture, so that the user can accept guidance of speech interaction. This improves user experience.

In a possible implementation, the pushing the guide information corresponding to the operation intent of the first operation includes: pushing the guide information to a first device, where the first device does not belong to the vehicle.

The guide information is pushed to the first device, so that the user views the guide information on an external device of the vehicle.

In a possible implementation, the pushing the guide information corresponding to the operation intent of the first operation includes: when a quantity of times of pushing first guide information within preset duration is less than or equal to a preset quantity of times, pushing the guide information corresponding to the operation intent of the first operation, where the first guide information is guide information corresponding to an operation intent of a second operation; and the second operation is a non-driving operation performed by the user on the vehicle in the traveling state of the vehicle. The second operation may be an operation performed by the user in a historical driving phase, the first guide information may be guide information pushed to the user in the historical driving phase, the second operation may be the same as or different from the first operation, and the first guide information may be the same as or different from the guide information corresponding to the operation intent of the first operation.

When the first guide information is pushed a small quantity of times, the guide information corresponding to the operation intent of the first operation is pushed, to avoid interference to driving of the user caused by pushing excessive guide information.

According to a second aspect, an embodiment of this application provides a control apparatus, including: an obtaining module, configured to obtain information about a first operation, where the first operation is a non-driving operation performed by a user on a vehicle in a traveling state of the vehicle; a processing module, configured to obtain an operation intent of the first operation through analysis based on the information about the first operation; and a push module, configured to push guide information corresponding to the operation intent of the first operation, where the guide information indicates the user to implement the operation intent of the first operation through speech interaction.

In a possible implementation, the obtaining module is further configured to obtain in-cockpit data of the vehicle, where the in-cockpit data includes data of a driver of the vehicle; and the processing module is further configured to determine, based on the in-cockpit data, that the user is the driver of the vehicle.

In a possible implementation, the processing module is specifically configured to: when the in-cockpit data includes data of one user, determine that the user is the driver of the vehicle; and when the in-cockpit data includes data of a non-driver, recognize the data of the driver of the vehicle to obtain a feature of the driver, and determine, based on the feature of the driver, that the user is the driver of the vehicle.

In a possible implementation, the feature of the driver includes a line-of-sight direction feature and/or a body action feature of the driver.

In a possible implementation, the push module is specifically configured to: when a vehicle speed of the vehicle is less than or equal to a first preset vehicle speed, push the guide information of the operation intent of the first operation.

In a possible implementation, the obtaining module is further configured to obtain the vehicle speed and/or the gear of the vehicle; and the processing module is further configured to determine, based on the vehicle speed and/or the gear, that the vehicle is in the traveling state.

In a possible implementation, the processing module is specifically configured to: when the vehicle speed is greater than or equal to a second preset vehicle speed, and/or the gear is a preset gear, determine that the vehicle is in the traveling state.

In a possible implementation, the push module is specifically configured to: display the guide information on a display; and/or play the guide information through a loudspeaker.

In a possible implementation, the push module is specifically configured to: push the guide information to a first application in a first device, where the first device does not belong to the vehicle.

In a possible implementation, the push module is specifically configured to: when a quantity of times of pushing first guide information within preset duration is less than or equal to a preset quantity of times, push the guide information corresponding to the operation intent of the first operation, where the first guide information is guide information corresponding to an operation intent of a second operation; and the second operation is a non-driving operation performed by the user on the vehicle in the traveling state of the vehicle.

For beneficial effect of the control apparatus provided in the second aspect and the possible implementations of the second aspect, refer to the beneficial effect achieved by the first aspect and the possible implementations of the first aspect. Details are not described herein again.

According to a third aspect, an embodiment of this application provides an electronic device, including a processor and a memory. The memory is configured to store a computer program, and the processor is configured to invoke and run the computer program stored in the memory, to perform the method in the first aspect or the possible implementations.

According to a fourth aspect, an embodiment of this application provides a chip, including a processor, configured to invoke computer instructions from a memory and run the computer instructions, so that a device in which the chip is installed performs the method in the first aspect or the possible implementations.

According to a fifth aspect, an embodiment of this application provides a computer-readable storage medium, configured to store computer program instructions, where the computer program enables a computer to perform the method in the first aspect or the possible implementations.

According to a sixth aspect, an embodiment of this application provides a computer program product, including computer program instructions, where the computer program instructions enable a computer to perform the method in the first aspect or the possible implementations.

According to a seventh aspect, an embodiment of this application provides an apparatus, including a logic circuit and an input/output interface. The input/output interface is configured to receive a signal from a communication apparatus other than the apparatus and transmit the signal to the logic circuit, or send a signal from the logic circuit to a communication apparatus other than the apparatus. The logic circuit is configured to execute code instructions to perform the method according to the first aspect and the possible implementations of the first aspect.

According to an eighth aspect, an embodiment of this application provides a terminal, including the apparatus according to the second aspect or the possible implementations.

According to a ninth aspect, an embodiment of this application provides a vehicle, including the control apparatus provided in any possible implementation of the third aspect.

### BRIEF DESCRIPTION OF DRAWINGS

FIG. 1 is a diagram of a hardware structure of a vehicle according to an embodiment of this application;
FIG. 2 is a schematic flowchart of a touch operation according to an embodiment of this application;
FIG. 3 is a schematic flowchart of a speech interaction guiding method according to an embodiment of this application;
FIG. 4A and FIG. 4B are a schematic flowchart of a speech interaction guiding method according to an embodiment of this application; and
FIG. 5 is a block diagram of a control apparatus of a vehicle according to an embodiment of this application.

### DESCRIPTION OF EMBODIMENTS

The following describes the technical solutions in embodiments of this application with reference to the accompanying drawings in embodiments of this application.

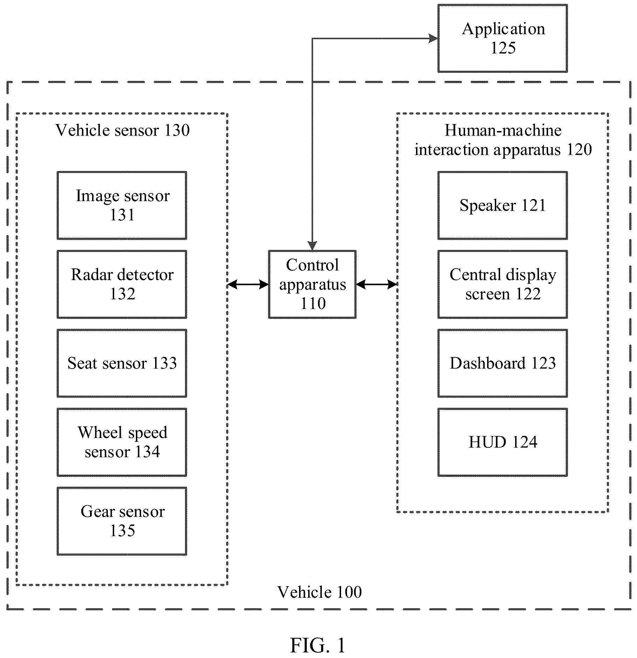

FIG. 1 is a diagram of a hardware structure of a vehicle according to an embodiment of this application. As shown in FIG. 1, a vehicle 100 includes but is not limited to some or all of a control apparatus 110, a human-machine interaction apparatus 120, and a vehicle sensor 130. The control apparatus 110 may be separately connected to the human-machine interaction apparatus 120 and the vehicle sensor 130.

The control apparatus 110 may be any hardware or software having a processing capability, for example, may be implemented as a vehicle control system and/or a cockpit control system. This is not limited in this application. When the control apparatus 110 includes a vehicle control system and a cockpit control system, the vehicle control system may implement data processing, and the cockpit control system may implement information push.

The human-machine interaction apparatus 120 may include but is not limited to some or all of a speaker 121, a central display screen 122, a dashboard 123, and a head-up display system 124. The head-up display system is also referred to as a head-up display (head-up display, HUD). The control apparatus 110 may push information to a user through the human-machine interaction apparatus 120. For example, the control apparatus 110 may play information through a loudspeaker of the speaker 121, for another example, the control apparatus 110 may display information through at least one of the central display screen 122, the dashboard 123, and the head-up display system 124. The control apparatus 110 may further obtain, through the human-machine interaction apparatus 120, information entered by the user. For example, the user performs a touch operation or an input operation on at least one of the central display screen 122, the dashboard 123, and the head-up display system 124, and the control apparatus 110 obtains information about a user operation through at least one of the central display screen 122, the dashboard 123, and the head-up display system 124.

The human-machine interaction apparatus 120 may be deployed in a vehicle cockpit. In addition, a human-cockpit interaction function may be further implemented by an apparatus deployed outside the vehicle, for example, an application 125 deployed in a terminal device. The terminal device may include but is not limited to a mobile phone (Mobile Phone), a tablet computer (Pad), a desktop computer, and the like. The terminal device in embodiments of this application may alternatively be a wearable device. The wearable device may also be referred to as a wearable intelligent device, and is a general term for wearable devices such as glasses, gloves, watches, clothes, and shoes that are developed by intelligently designing daily wear through a wearable technology. The wearable device is a portable device that can be directly worn on the body or integrated into clothes or an accessory of a user. The control apparatus 110 may obtain information about a user operation through the application 125, or push information to the user through the application 125.

The vehicle sensor 130 may include but is not limited to some or all of an image sensor 131, a radar detector 132, a seat sensor 133, a wheel speed sensor 134, and a gear sensor 135. The image sensor 131 may include a camera deployed inside a vehicle cockpit, for example, a camera of a driver monitor system (driver monitor system, DMS) or a camera of a camera monitor system (camera monitor system), and is configured to capture an image inside the vehicle cockpit. The image sensor 131 may further include a camera deployed outside the vehicle, and is configured to capture an image around the vehicle. The radar detector 132 may include an ultrasonic radar detector, a millimeter-wave radar detector, and the like, and is configured to detect a user in the vehicle cockpit. The seat sensor 133 is configured to detect whether a user is carried on a seat of the vehicle. The wheel speed sensor 134 may be configured to collect a vehicle speed of the vehicle. The gear sensor 135 may be configured to collect a gear of the vehicle. Further, the vehicle sensor 130 may send collected sensor data to the control apparatus 110, so that the control apparatus 110 obtains data of the vehicle.

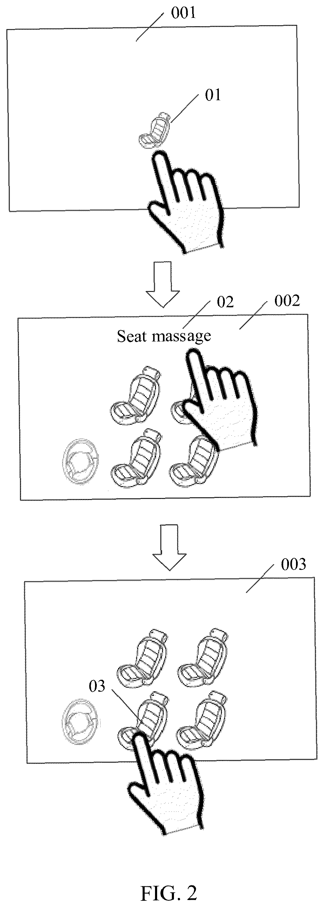

The user may perform an operation in a touch manner by using the human-machine interaction apparatus 120, to control the vehicle. For example, the user needs to activate a seat massage function of a driver seat. As shown in FIG. 2, the user touches and selects a seat control 01 on a home screen 001 of the central display screen 122, to start a seat control interface 002, touches and selects a seat massage control 02 on the seat control interface 002, to start a seat selection interface 003, and touches and selects a seat control 03 in the driver seat on the seat selection interface 003, to activate the seat massage function of the driver seat. It can be learned that the operation process is complex. In comparison, the user inputs a voice instruction "start driver seat massage" into an audio collection apparatus (for example, the speaker 121), to control to activate the seat massage function of the driver seat. This feature provides high interaction convenience. Based on this, in this application, the user is guided through speech interaction based on an operation intent of the user, to prevent the user from implementing the operation intent through a touch operation when the operation intent can be implemented through speech interaction. This ensures convenience of human-machine interaction.

It should be noted that, for ease of understanding, in this application, a human-machine interaction scenario in an intelligent vehicle is used as an example to describe the speech interaction guiding method. However, this is not limited. This application is applicable to any human-machine interaction scenario, for example, human-machine interaction with an industrial control device in an industrial control scenario, and a speech interaction guiding method provided in embodiments of this application is described in detail below with reference to the accompanying drawings in an entertainment scenario.

It should be understood that, merely for ease of understanding and description, the following describes the method provided in embodiments of this application by using a control apparatus in a vehicle as an execution body. The control apparatus may be, for example, the control apparatus 110 in FIG. 1. The control apparatus may be implemented as a component in the vehicle, for example, a chip, a chip system, or another functional module that can invoke and execute a program.

However, it should be understood that this shall not constitute any limitation on an execution body of the method provided in this application. Any device may serve as the execution entity of the method provided in embodiments of this application provided that a program that records code of the method provided in embodiments of this application can be run to implement the method provided in embodiments of this application.

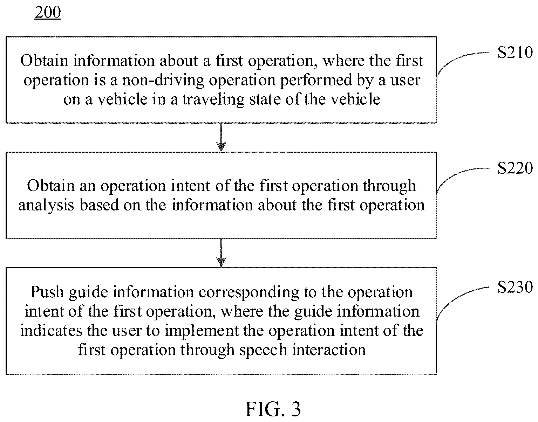

FIG. 3 is a schematic flowchart of a speech interaction guiding method 200 according to an embodiment of this application. As shown in FIG. 3, the method 200 may include some or all of the following steps.

S210: Obtain information about a first operation, where the first operation is a non-driving operation performed by a user on a vehicle in a traveling state of the vehicle.

S220: Obtain an operation intent of the first operation through analysis based on the information about the first operation.

S230: Push guide information corresponding to the operation intent of the first operation, where the guide information indicates the user to implement the operation intent of the first operation through speech interaction.

A driving operation is an operation of controlling traveling of the vehicle by a driver, for example, controlling the vehicle to move forward, move backward, or turn. Except for the driving operation, an operation performed by the user (including the driver) of the vehicle on the vehicle is a non-driving operation, for example, controlling an air conditioning function, controlling a fragrance function, playing music, starting navigation, and activating the seat massage function of the driver seat in the foregoing example.

The first operation may be one or more touch operations. The touch operation may include but is not limited to a single-tap touch operation, a double-tap touch operation, a drag touch operation, a slide touch operation, a single-point touch operation, a multi-point touch operation, a touch input operation, and the like, for example, an operation of activating the seat massage function by the user in the example shown in FIG. 2. It should be understood that the first operation may be implemented by the user through touch, or may be implemented by the user by controlling a cursor, for example, a tap operation, a drag operation, a slide operation, a character input operation, or the like implemented by the user by operating an input device like a mouse or a keyboard.

The information about the first operation may be operation information recorded by a human-machine interaction apparatus (for example, at least one of a central display screen, a dashboard, and an HUD) or a touchscreen in the human-machine interaction apparatus in response to the operation of the user. In S210, the human-machine interaction apparatus may send collected operation information to a control apparatus after each operation information collection is completed, or the human-machine interaction apparatus may periodically send collected operation information to the control apparatus, so that the control apparatus obtains the information about the first operation. Alternatively, the control apparatus may periodically read operation information from the human-machine interaction apparatus, or the control apparatus may read operation information from the human-machine interaction apparatus in response to a request of the human-machine interaction apparatus, to obtain the information about the first operation.

A user who performs the first operation may be a user of the vehicle, including a driver and/or a non-driver.

The traveling state of the vehicle may be any state after the vehicle is started, for example, forward, reverse, or turn. It should be understood that a higher traveling speed of the vehicle indicates a higher driving risk caused by performing the first operation by the user on the vehicle.

In S220, the control apparatus analyzes the information about the first operation, to determine the operation intent of the user. For example, as shown in FIG. 2, the information about the first operation includes: The user touches and selects the seat control on the home screen 001 of the central display screen 122, touches and selects the seat massage control on the seat control interface 002, and touches and selects the seat control of the driver seat on the seat selection interface 003, and the control apparatus may determine that the operation intent of performing the first operation by the user is to activate the seat massage function of the driver seat.

An intent recognition model may be deployed in the control apparatus. The control apparatus inputs the information about the first operation into the intent recognition model, and outputs the operation intent of the first operation. The intent recognition model may be obtained through pre-training.

Further, the control apparatus may determine, based on the operation intent obtained through analysis, the guide information corresponding to the operation intent. For example, the operation intent is to start seat massage in the driver seat. Guide information corresponding to the operation intent may be "If you want to activate a seat massage function in the driver seat, you may say 'start seat massage in the driver seat'." Alternatively, the guide information may be "You can control the seat through speech interaction." It should be understood that the guide information may include at least one of an audio, a character, an image, and a video.

In an implementation, the control apparatus may determine, in a preset correspondence, the guide information corresponding to the operation intent of the first operation. The correspondence may be a correspondence between an operation intent and guide information. In the correspondence, one operation intent may correspond to one piece of guide information. For example, if the operation intent is to activate the seat massage function in the driver seat, corresponding guide information is "If you want to activate the seat massage function in the driver seat, you may say 'start the driver seat massage'." Alternatively, a plurality of operation intents may correspond to one piece of guide information. If the operation intent is to start seat massage, adjust a seat height, or increase a seat temperature, corresponding guide information is "You can control the seat through speech interaction." The control apparatus may search the correspondence for the operation intent of the first operation, and determine the guide information corresponding to the operation intent of the first operation in the correspondence.

In another implementation, the control apparatus may generate corresponding guide information based on the operation intent. For example, the control apparatus inputs the operation intent into a text generator, to obtain guide information corresponding to the operation intent; or the control apparatus generates, based on the operation intent and a guide information template, guide information corresponding to the operation intent.

The first operation in embodiments of this application may be an operation that has been completed, that is, the operation intent of the user can be implemented by using the first operation. Alternatively, the first operation may be an operation that has not been completed, that is, the operation intent of the user cannot be implemented by using the first operation. Regardless of whether the first operation implements the operation intent of the user, the control apparatus may identify the operation intent of the user based on the first operation. When the first operation is an operation that is not completely performed by the user, the control apparatus has determined an intent of the first operation by analyzing the information about the first operation. In this case, the control apparatus can guide the user through speech interaction in a process of the user operation, to improve timeliness of speech interaction guide information, and guidance can be performed more efficiently, to improve convenience of human-machine interaction and driving safety. When the first operation is an operation that has been performed by the user, the operation intent determined by the control apparatus by analyzing the information about the first operation is more accurate, and the determined guide information is more accurate. This improves reliability of speech interaction guidance.

In S230, the control apparatus may push, through the human-machine interaction apparatus, the guide information corresponding to the operation intent of the first operation, or the control apparatus may send the guide information to a cockpit control system, so that the cockpit control system pushes the guide information through the human-machine interaction apparatus. The human-machine interaction apparatus may present the guide information in a visual, auditory, or other perceptual manner. For example, an audio in the guide information is played through a loudspeaker, and at least one of an image, a text, or a video in the guide information is displayed on a display. The loudspeaker may be a component in the speaker 121 shown in FIG. 1, and the display may be a component of at least one of the central display screen 122, the dashboard 123, and the head-up display system 124 shown in FIG. 1.

In addition, the control apparatus may push the guide information corresponding to the operation intent of the first operation in a manner like steering wheel vibration, seat vibration, or light blinking.

In another implementation of S230, the control apparatus may send the guide information to an apparatus outside the vehicle, for example, a first device or a first application (application, APP) (for example, a vehicle owner APP) deployed in the first device. The first device may be a terminal device of a user, the terminal device has been described in the foregoing example, and details are not described herein again.

Therefore, in this embodiment of this application, speech interaction guidance is performed on the user based on the operation intent of the user, to implement intelligent identification of the user intent and effective guidance, and prevent the user from implementing the operation intent by using an operation like touch when the operation intent can be implemented through speech interaction, ensure convenience of human-machine interaction.

It should be understood that when the user performing the first operation on the vehicle is a driver of the vehicle, the user performing the first operation on the vehicle has greater impact on driving safety. Therefore, in some embodiments, the control apparatus may determine whether a user is the driver of the vehicle, and push guide information when determining that a user that performs the first operation is the driver of the vehicle.

For example, the control apparatus may obtain in-cockpit data of the vehicle, determine, based on the in-cockpit data, whether the user that performs the first operation is the driver of the vehicle, and push the guide information when determining that the user that performs the first operation is the driver of the vehicle. It should be noted that the in-cockpit data of the vehicle may include at least one of image data, radar detection data, and seat bearing data.

As shown in FIG. 1, the image data may be an image that is inside the vehicle cockpit and that is captured by the image sensor 131 (referred to as an in-cockpit image below), and the in-cockpit image includes an image of the driver. The radar detection data may be detection data that is collected by the radar detector 132 and that is collected inside the vehicle cockpit, and the radar detection data includes detection data for the driver. The seat bearing data may include a result of detecting a bearing status of each seat by the seat sensor 133. For example, the seat sensor 133 senses, by using a temperature, a bearing capacity, and the like, whether the seat bears a user.

In some embodiments, the control apparatus may determine whether the in-cockpit data further includes data of a non-driver in addition to data of the driver, for example, whether the in-cockpit image includes an image of a non-driver, whether the radar detection data includes detection data of the non-driver, and whether the seat bearing data includes data about whether a seat of the non-driver bears a user. In a first case, when the in-cockpit data includes data of one user, the control apparatus may determine that the first operation is performed by the driver, that is, a user that performs the first operation is the driver. In a second case, when the data of the in-cockpit includes data of the non-driver, the control apparatus may recognize data of the driver in the in-cockpit data to obtain a feature of the driver, and determine, based on the feature of the driver, whether the user performing the first operation is the driver.

For the second case, it should be noted that the feature of the driver may include but is not limited to a line-of-sight direction feature and/or a body action feature of the driver. For example, when a line-of-sight direction of the driver points to the human-machine interaction apparatus that inputs the first operation, the control apparatus determines that a user that performs the first operation is the driver of the vehicle. For another example, when the head of the driver turns to the human-machine interaction apparatus that inputs the first operation, the control apparatus determines that the user that performs the first operation is the driver of the vehicle. For another example, when the hand of the driver approaches or comes into contact with the human-machine interaction apparatus that inputs the first operation, the user that is determined by the control apparatus and that performs the first operation is the driver of the vehicle. Optionally, in the second case, the control apparatus may input the in-cockpit data into a user identification model, and the user identification model outputs identification result indicating whether the user performing the first operation is the driver of the vehicle.

In some embodiments, to further improve driving safety, the control apparatus may push the guide information corresponding to the operation intent of the first operation when a vehicle speed of the vehicle is less than or equal to a first preset vehicle speed. The first preset vehicle speed is not limited in embodiments of this application. The first preset vehicle speed may be a fixed value. For example, the first preset vehicle speed may be 0, 3 km/h, 5 km/h, or the like. Alternatively, the first preset vehicle speed may be a dynamically adjusted value. For example, the first preset vehicle speed may decrease with an increase in a flow of people on a road. In an example, the first preset vehicle speed may be 0. To be specific, when the vehicle is in a parking state, the control apparatus pushes the guide information corresponding to the operation intent of the first operation.

In some embodiments, the control apparatus may determine whether the vehicle is in the traveling state, and may further determine whether the user performs the first operation on the vehicle in the traveling state of the vehicle. For example, the control apparatus may obtain a vehicle speed and/or a gear of the vehicle. For example, the control apparatus may obtain the vehicle speed of the vehicle from the wheel speed sensor 134, and obtain the gear of the vehicle from the gear sensor 135. Further, the control apparatus may determine, based on the vehicle speed and/or the gear, whether the vehicle is in the traveling state. For example, if the vehicle speed is greater than or equal to a second preset vehicle speed, the control apparatus determines that the vehicle is in the traveling state; or if the vehicle speed is less than the second preset vehicle speed, the control apparatus determines that the vehicle is not in the traveling state. For another example, if the gear is a preset gear, the control apparatus determines that the vehicle is in the traveling state; or if the gear is not the preset gear (for example, the gear of the vehicle is in a parking (parking, P) gear), the control apparatus determines that the vehicle is not in the traveling state. For another example, if the vehicle speed is greater than or equal to the second preset vehicle speed, and the gear is the preset gear, the control apparatus determines that the vehicle is in the traveling state; otherwise, the control apparatus determines that the vehicle is not in the traveling state.

The second preset vehicle speed may be a fixed value. For example, the second preset vehicle speed may be 20 km/h, 30 km/h, 35 km/h, or the like. Alternatively, the second preset vehicle speed may be a dynamically adjusted value. The preset gear is a gear at which the vehicle can travel. For example, the preset gear may include but is not limited to a reverse (reverse, R) gear, a neutral (neutral, N) gear, and a drive (drive, D) gear.

In this application, a parameter for determining whether the vehicle is in the traveling state is not limited to the vehicle speed and/or the gear. For example, the control apparatus may further collect environmental data in real time by using a radar detection apparatus, and then determine, based on the collected environmental data, whether the vehicle is in the traveling state.

In some embodiments, to avoid interference to driving of the user caused by pushing too much guide information, before pushing the guide information corresponding to the operation intent of the first operation, the control apparatus may determine whether the guide information has been pushed a plurality of times. For example, the control apparatus determines whether a quantity of times of pushing first guide information is less than or equal to a preset quantity of times, and when the quantity of times of pushing the first guide information is less than or equal to the preset quantity of times, the control apparatus pushes the guide information corresponding to the operation intent of the first operation.

The first guide information is guide information corresponding to an operation intent of a second operation, and the second operation is a non-driving operation performed by the user on the vehicle in the traveling state of the vehicle. The second operation and the first operation may be a same operation or different operations. This is not limited in this application. In addition, the second operation is an operation other than the first operation, and a plurality of second operations may be a same second operation or different second operations. When the second operation and the first operation are a same operation, guide information of the second operation and the guide information corresponding to the operation intent of the first operation are same guide information. When the second operation and the first operation are different operations, the guide information of the second operation may be the same as or different from the guide information corresponding to the operation intent of the first operation. Similarly, pieces of first guide information corresponding to different second operations may be the same or may be different, and pieces of first guide information corresponding to a same second operation is generally the same. The first guide information pushed a plurality of times may be guide information corresponding to the second operation performed a plurality of times.

Optionally, the operation intent of the second operation and the operation intent of the first operation may be operation intents of a same type. For example, the operation intent of the second operation is turning on an air conditioner, and the operation intent of the first operation is decreasing a temperature of the air conditioner. In this case, both the operation intent of the first operation and the operation intent of the second operation are operation intents of an air conditioner control type.

Optionally, a quantity that is of times of pushing the first guide information and that is determined by the control apparatus may be a quantity of times of pushing the first guide information within a period of time or within a traveling mileage, or may be a quantity of times of pushing the first guide information after the vehicle is started.

In some embodiments, the control apparatus may determine a quantity of times of pushing the first guide information within preset duration, and when the quantity of times of pushing the first guide information within the preset duration is less than or equal to a preset quantity of times, the control apparatus pushes the guide information corresponding to the operation intent of the first operation. For example, the control apparatus determines whether the first guide information has been pushed within 5 minutes, that is, whether a quantity of times of pushing the first guide information within 5 minutes is equal to 0. When the quantity of times of pushing the first guide information within 5 minutes is equal to 0, the guide information corresponding to the operation intent of the first operation is pushed.

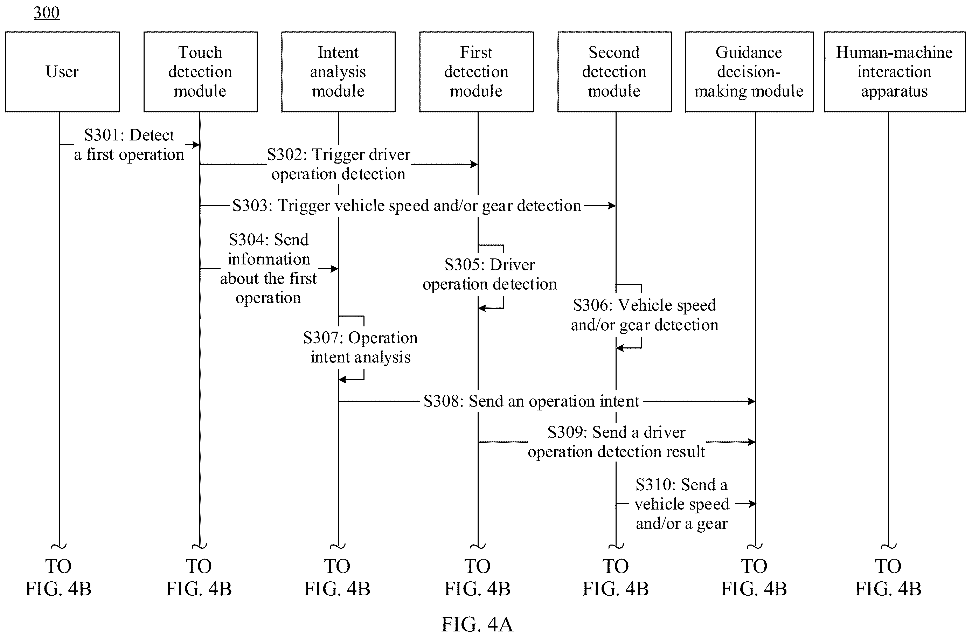

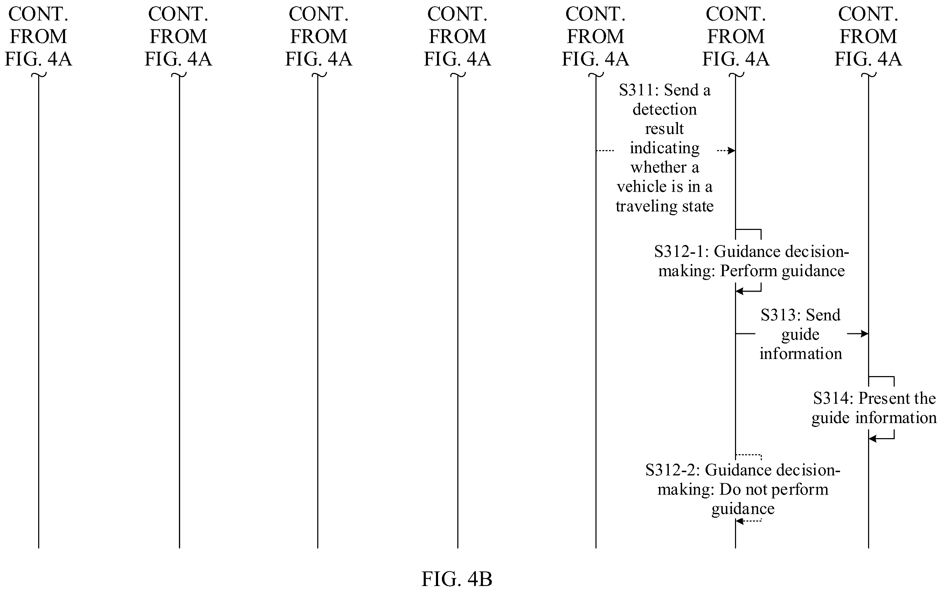

FIG. 4A and FIG. 4B are a schematic flowchart of a speech interaction guiding method 300 according to an embodiment of this application. The method 300 is described by using interaction between a plurality of different modules of the control apparatus as an example. For example, the control apparatus includes a touch detection module, an intent analysis module, a first detection module, a second detection module, and a guidance decision-making module. As shown in FIG. 4A and FIG. 4B, the method 300 may include some or all of the following processes.

S301: The touch detection module detects a first operation of a user.

S302: The touch detection module triggers the first detection module to start driver operation detection.

S303: The touch detection module triggers the second detection module to start vehicle speed and/or gear detection.

S304: The touch detection module sends information about the first operation to the intent analysis module.

S305: The first detection module performs driver operation detection.

S306: The second detection module performs vehicle speed and/or gear detection.

S307: The intent analysis module performs operation intent analysis based on the information about the first operation.

S308: The intent analysis module sends an operation intent of the first operation to the guidance decision-making module.

S309: The first detection module sends a driver operation detection result to the guidance decision-making module.

S310: The second detection module sends a vehicle speed and/or a gear to the guidance decision-making module.

S311: The second detection module sends vehicle stop information to the guidance decision-making module.

S312-1: The guidance decision-making module performs guidance decision-making: If guidance is performed, the following S313 and S314 are performed. Alternatively, S312-2: The guidance decision-making module performs guidance decision-making: If no guidance is performed, a speech interaction guidance process ends.

S313: The guidance decision-making module sends guide information to a human-machine interaction apparatus.

S314: The human-machine interaction apparatus presents the guide information.

An execution sequence of S302 to S304 is not limited in this application, an execution sequence of S305 to S307 is not limited, and an execution sequence of S308 to S310 is not limited.

After detecting the first operation performed by the user by using the human-machine interaction apparatus, the touch detection module may trigger the first detection module and the second detection module to start detection, and send information about the detected first operation to the intent analysis module.

In S305, the first detection module may detect, based on the in-cockpit data in the foregoing example, whether the user performing the first operation is the driver, to obtain a driving operation detection result.

In S310, the second detection module may directly send the vehicle speed and/or the gear to the guidance decision-making module. Alternatively, a second detection apparatus may determine, based on the vehicle speed and/or the gear, whether the vehicle speed is greater than a second preset vehicle speed and/or whether the gear is a preset gear, and send a detection result indicating whether the vehicle speed is greater than the second preset vehicle speed and/or whether the gear is the preset gear to the guidance decision-making module. Alternatively, the second detection apparatus may determine, based on the vehicle speed and/or the gear, a detection result indicating whether the vehicle is in a traveling state, and send the detection result indicating whether the vehicle is in the traveling state to the guidance decision-making module.

In S312-1, the guidance decision-making module may determine to guide speech interaction for the operation intent of the first operation based on the driver operation detection result sent by the first detection module in S309 and the vehicle speed and/or the gear (or a detection result determined based on the vehicle speed and/or the gear) sent by the second detection module in S310. For example, if the driver operation detection result indicates that the user performing the first operation is the driver of the vehicle, and the guidance decision-making module determines, based on the vehicle speed and/or the gear, that the vehicle is in the traveling state when the user performs the first operation, the guidance decision-making module determines to guide the first operation through speech interaction.

In S312-2, the guidance decision-making module may determine not to guide speech interaction for the operation intent of the first operation based on the driver operation detection result sent by the first detection module in S309 and the vehicle speed and/or the gear (or the detection result determined based on the vehicle speed and/or the gear) sent by the second detection module in S310. For example, when the driver operation result indicates that the user performing the first operation is not the driver of the vehicle, or the vehicle is not in the traveling state when the user performs the first operation, the guidance decision-making module determines not to guide the operation intent of the first operation through speech interaction.

When sending the guide information to the human-machine interaction apparatus, the control apparatus may record the determined guide information, and further push the guide information to the human-machine interaction apparatus when the vehicle is not in the traveling state. In this case, the guidance decision-making module may send, to the human-machine interaction apparatus, a plurality of pieces of guide information (including the guide information corresponding to the operation intent of the first operation) that are not sent.

Similar to S310, the second detection module may directly send the vehicle speed to the guidance decision-making module; or the second detection module may determine whether the vehicle speed is less than or equal to the first preset vehicle speed, and send a detection result indicating whether the vehicle speed is less than or equal to the first preset vehicle speed to the guidance decision-making module; or the second detection module may determine, based on whether the vehicle speed is less than or equal to the first preset vehicle speed, whether the vehicle is in the traveling state, and send a detection result indicating whether the vehicle is in the traveling state to the guidance decision-making module.

Optionally, similar to S312-1 and S312-2, whether the vehicle is in the traveling state may be determined based on the gear of the vehicle, or whether the vehicle is in the traveling state may be determined with reference to the gear and the vehicle speed of the vehicle. For example, the second detection module may send the gear to the guidance decision-making module. Alternatively, the second detection module may determine whether the gear is a preset gear, and send a detection result indicating whether the gear is the preset gear to the guidance decision-making module. Alternatively, the second detection module may determine, depending on whether the gear is the preset gear (or depending on whether the vehicle speed is less than or equal to the first preset vehicle speed), whether the vehicle is in the traveling state, and send a detection result indicating whether the vehicle is in the traveling state to the guidance decision-making module.

S311 is an optional implementation, and therefore is identified by a dashed line in FIG. 4A and FIG. 4B. When S311 is not performed, the guidance decision-making module may send the guide information to the human-machine interaction apparatus after determining to guide the operation intent of the first operation, or after determining the guide information. When S311 is performed, after determining that the vehicle is not in the traveling state (for example, the vehicle is in a parking state), the guidance decision-making module sends the guide information to the human-machine interaction apparatus.

In S313, when determining to perform speech interaction guidance on the operation intent of the first operation, the guidance decision-making module sends the guide information to the human-machine interaction apparatus, and then presents the guide information through the human-machine interaction apparatus in S313.

In some embodiments, the human-machine interaction apparatus in FIG. 4A and FIG. 4B may be replaced with a first application. When determining to perform speech interaction guidance on the operation intent of the first operation, the guidance decision-making module sends the guide information to the first application, and further presents the guide information through the first application in S313.

For an implementation process that is not described in detail in the method 300 shown in FIG. 4A and FIG. 4B, refer to the foregoing example. For brevity, details are not described again.

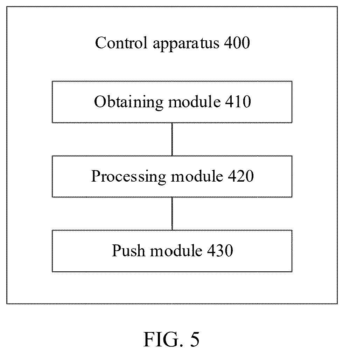

FIG. 5 is a block diagram of a control apparatus of a vehicle according to an embodiment of this application. As shown in FIG. 5, a vehicle control apparatus 400 includes an obtaining module 410, a processing module 420, and a push module 430.

The obtaining module 410 may be configured to obtain information about a first operation, where the first operation is a non-driving operation performed by a user on a vehicle in a traveling state of the vehicle. The processing module 420 may be configured to obtain an operation intent of the first operation through analysis based on the information about the first operation. The push module 430 may be configured to push guide information corresponding to the operation intent of the first operation, where the guide information indicates the user to implement the operation intent of the first operation through speech interaction.

It should be understood that specific processes in which the modules perform the foregoing corresponding steps are described in detail in the foregoing method embodiments. For brevity, details are not described herein again.

It should be understood that division into the modules of the foregoing apparatus 400 is merely logical function division. During actual implementation, all or some of the units may be integrated into one physical entity may be physically separated.

It should be understood that the processor in embodiments of this application may be an integrated circuit chip and has a data processing capability. In an implementation process, the steps in the foregoing method embodiments may be completed by using an integrated logic circuit of hardware in the processor or instructions in a form of software. The processor may be a general purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly executed and completed by a hardware decoding processor, or may be executed and completed by using a combination of hardware and software modules in a decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a non-volatile memory, or may include a volatile memory and a nonvolatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories of the systems and methods described in the text are intended to include, but are not limited to these and any other suitable types of memories.

It should be understood that the foregoing memory is an example but not a limitation description. For example, the memory in embodiments of this application may alternatively be a static random access memory (static RAM, SRAM), a dynamic random access memory (dynamic RAM), DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (Direct Rambus RAM, DR RAM), and the like. In other words, the memory described in this embodiment of this application is intended to include, but not limited to, these memories and any memory of another appropriate type.

An embodiment of this application further provides an electronic device. The electronic device may be implemented as the vehicle control apparatus in embodiments of this application, and the apparatus includes: A processor and a memory. The memory is configured to store a computer program, and the processor is configured to invoke and run the computer program stored in the memory, to perform corresponding procedures in the methods in embodiments of this application. For brevity, details are not described herein again.

An embodiment of this application further provides a computer-readable storage medium, configured to store a computer program.

In some embodiments, the computer-readable storage medium may be used in the control apparatus in embodiments of this application, and the computer program enables a computer to perform corresponding procedures in the methods in embodiments of this application. For brevity, details are not described herein again.

An embodiment of this application further provides a computer program product, including computer program instructions.

In some embodiments, the computer program product may be used in the control apparatus in embodiments of this application, and the computer program instructions enable a computer to perform corresponding procedures in the methods in embodiments of this application. For brevity, details are not described herein again.

An embodiment of this application further provides a computer program.

In some embodiments, the computer program may be used in the control apparatus in embodiments of this application. When the computer program is run on a computer, the computer is enabled to perform corresponding procedures in the methods in embodiments of this application. For brevity, details are not described herein again.

An embodiment of this application further provides a vehicle.

In some embodiments, the vehicle includes the control apparatus in embodiments of this application, and the control apparatus is configured to perform the speech interaction guiding method in any embodiment of this application.

In embodiments of this application, "first", "second", and various numerical numbers are merely used for differentiation for ease of but are not used to limit the scope of embodiments of this application, for example, different operations and different preset vehicle speeds are distinguished.

A person of ordinary skill in the art may be aware that, in combination with the examples described in embodiments disclosed in this specification, modules, and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A speech interaction guiding method, comprising:
obtaining information about a first operation, wherein the first operation is a non-driving operation performed by a user on a vehicle in a traveling state of the vehicle;
obtaining an operation intent of the first operation through analysis based on the information about the first operation; and
pushing guide information corresponding to the operation intent of the first operation, wherein the guide information indicates the user to implement the operation intent of the first operation through speech interaction.

2. The method according to claim 1, further comprising:
obtaining in-cockpit data of the vehicle, wherein the in-cockpit data comprises data of a driver of the vehicle; and
determining, based on the in-cockpit data, that the user is the driver of the vehicle.

3. The method according to claim 2, wherein the determining, based on the in-cockpit data, that the user is the driver of the vehicle comprises:
when the in-cockpit data comprises data of one user, determining that the user is the driver of the vehicle; and
when the in-cockpit data comprises data of a non-driver, recognizing the data of the driver of the vehicle to obtain a feature of the driver, and determining, based on the feature of the driver, that the user is the driver of the vehicle.

4. The method according to claim 3, wherein the feature of the driver comprises a line-of-sight direction feature and/or a body action feature of the driver.

5. The method according to any one of claims 1 to 4, wherein the method further comprises:
obtaining a vehicle speed and/or a gear of the vehicle; and
determining, based on the vehicle speed and/or the gear, that the vehicle is in the traveling state.

6. The method according to claim 5, wherein the determining, based on the vehicle speed and/or the gear, that the vehicle is in the traveling state comprises:
when the vehicle speed is greater than or equal to a second preset vehicle speed, and/or the gear is a preset gear, determining that the vehicle is in the traveling state.

7. The method according to any one of claims 1 to 6, wherein the pushing the guide information corresponding to the operation intent of the first operation comprises: pushing the guide information corresponding to the operation intent of the first operation through a first device, wherein the first device belongs to the vehicle and comprises a display and/or a loudspeaker;
displaying the guide information on the display; and/or
playing the guide information through the loudspeaker.

8. The method according to any one of claims 1 to 7, wherein the pushing the guide information corresponding to the operation intent of the first operation comprises:
pushing the guide information to the first device, wherein the first device does not belong to the vehicle.

9. The method according to any one of claims 1 to 8, wherein the pushing the guide information corresponding to the operation intent of the first operation comprises:
when a quantity of times of pushing first guide information within preset duration is less than or equal to a preset quantity of times, pushing the guide information corresponding to the operation intent of the first operation, wherein the first guide information is guide information corresponding to an operation intent of a second operation, and the second operation is a non-driving operation performed by the user on the vehicle in the traveling state of the vehicle.

10. The method according to any one of claims 1 to 9, wherein the pushing the guide information corresponding to the operation intent of the first operation comprises:
when the vehicle speed of the vehicle is less than or equal to a first preset vehicle speed, pushing the guide information corresponding to the operation intent of the first operation.

11. A control apparatus, comprising:
an obtaining module, configured to obtain information about a first operation, wherein the first operation is a non-driving operation performed by a user on a vehicle in a traveling state of the vehicle;
a processing module, configured to obtain an operation intent of the first operation through analysis based on the information about the first operation; and
a push module, configured to push guide information corresponding to the operation intent of the first operation, wherein the guide information indicates the user to implement the operation intent of the first operation through speech interaction.

12. The apparatus according to claim 11, wherein
the obtaining module is further configured to obtain in-cockpit data of the vehicle, wherein the in-cockpit data comprises data of a driver of the vehicle; and
the processing module is further configured to determine, based on the in-cockpit data, that the user is the driver of the vehicle.

13. The apparatus according to claim 12, wherein the processing module is specifically configured to:
when the in-cockpit data comprises data of one user, determine that the user is the driver of the vehicle; and
when the in-cockpit data comprises data of a non-driver, recognize the data of the driver of the vehicle to obtain a feature of the driver, and determine, based on the feature of the driver, that the user is the driver of the vehicle.

14. The apparatus according to claim 13, wherein the feature of the driver comprises a line-of-sight direction feature and/or a body action feature of the driver.

15. The apparatus according to any one of claims 11 to 14, wherein the push module is specifically configured to:
when a vehicle speed of the vehicle is less than or equal to a first preset vehicle speed, push the guide information of the operation intent of the first operation.

16. The apparatus according to any one of claims 11 to 15, wherein
the obtaining module is further configured to obtain the vehicle speed and/or a gear of the vehicle; and
the processing module is further configured to determine, based on the vehicle speed and/or the gear, that the vehicle is in the traveling state.

17. The apparatus according to claim 16, wherein the processing module is specifically configured to:
when the vehicle speed is greater than or equal to a second preset vehicle speed, and/or the gear is a preset gear, determine that the vehicle is in the traveling state.

18. The apparatus according to any one of claims 11 to 17, wherein the push module is specifically configured to:
display the guide information on a display; and/or
play the guide information through a loudspeaker.

19. The apparatus according to any one of claims 11 to 18, wherein the push module is specifically configured to:
push the guide information to a first application in a first device, wherein the first device does not belong to the vehicle.

20. The apparatus according to any one of claims 11 to 19, wherein the push module is specifically configured to:
when a quantity of times of pushing first guide information within preset duration is less than or equal to a preset quantity of times, push the guide information corresponding to the operation intent of the first operation, wherein the first guide information is guide information corresponding to an operation intent of a second operation; and the second operation is a non-driving operation performed by the user on the vehicle in the traveling state of the vehicle.

21. A computer program product, comprising computer program instructions, wherein the computer program instructions enable a computer to perform the method according to any one of claims 1 to 10.

22. A computer-readable storage medium, configured to store computer program instructions, wherein the computer program enables a computer to perform the method according to any one of claims 1 to 10.

23. A chip, comprising a processor, configured to invoke computer instructions from a memory and run the computer instructions, so that a device installed with the chip performs the method according to any one of claims 1 to 10.

24. An electronic device, comprising a processor and a memory, wherein the memory is configured to store a computer program, and the processor is configured to invoke and run the computer program stored in the memory, to perform the method according to any one of claims 1 to 10.

25. A vehicle, comprising the control apparatus according to any one of claims 11 to 20.
